# EUROPÄISCHE PATENTSCHRIFT

(11) **EP 1 651 505 B1**
(45) Veröffentlichungstag und Bekanntmachung des Hinweises auf die Patenterteilung: **18.04.2007**
(21) Anmeldenummer: 04762607.2
(22) Anmeldetag: 05.08.2004
(51) Int. Cl.: B62D 65/00

(54) **TRANSPORTVORRICHTUNG FÜR EIN KRAFTFAHRZEUG BZW.TEILMONTIERTES KRAFTFAHRZEUG IM LAUFENDEN PRODUKTIONSPROZESS**
TRANSPORT DEVICE FOR A MOTOR VEHICLE OR A PARTIALLY ASSEMBLED MOTOR VEHICLE DURING THE PRODUCTION PROCESS
DISPOSITIF DE TRANSPORT D'UN VEHICULE AUTOMOBILE OU D'UN VEHICULE AUTOMOBILE PARTIELLEMENT MONTE DANS LE COURS DU PROCESSUS DE PRODUCTION

(30) Priorität: 06.08.2003 DE 10336399
(43) Veröffentlichungstag der Anmeldung: 03.05.2006
(73) Patentinhaber: Dürr Aktiengesellschaft, 70435 Stuttgart (DE)
(72) Erfinder: DE MOLIERE, Frédéric, 64367 Mühlberg (DE); MOGCK, Gerhard, 74199 Untergruppenbach (DE); TENTRUP, Thomas, 66663 Merzig (DE); SPIEGELBERG, Gernot, 71296 Hildesheim (DE)
(74) Vertreter: Wieske, Thilo
(86) Internationale Anmeldenummer: PCT/DE2004/001762
(87) Internationale Veröffentlichungsnummer: WO 2005/014375

(56) Entgegenhaltungen:
- WO-A-00/78594
- DE-A- 19 638 324
- US-A- 5 207 309
- US-A- 5 293 308
- US-B1- 6 237 400

## Beschreibung

Die vorliegende Erfindung betrifft eine Transportvorrichtung für ein Kraftfahrzeug bzw. teilmontiertes Kraftfahrzeug im laufenden Produktionsprozess nach dem Oberbegriff des Patentanspruchs 1.

Derartige Transportvorrichtungen sind bekannt. Von der Dürr Automotion GmbH in Stuttgart wird ein derartiges System angeboten, bei dem verschiedene Arten von Transportvorrichtungen mit elektrischer Energie versorgbar sind. Das System ist unter der Bezeichnung "MOVITRANS" bekannt und wird unter anderem im Katalog für die Jahre 2003 und 2004 angeboten. Dabei werden zwar drahtgebunden aber dennoch berührungslos zu den einzelnen beweglichen Transportvorrichtungen Energie sowie Informationen übertragen. Als Transportvorrichtungen kommen dabei die Fahrzeugaufnahmen einer Hängebahn in Frage, aber auch Schubplattformen und sogenannte FTS (fahrerlose Transportsysteme). Die Transportvorrichtungen sind dabei zur Aufnahme von Fahrzeugen oder teilmontierten Fahrzeugen im laufenden Produktionsprozess ausgestaltet. Mittels dieser Transportvorrichtungen werden die Fahrzeuge bzw. teilmontierten Fahrzeuge während des Produktionsprozesses zu einzelnen Arbeitsstationen befördert. An diesen Arbeitsstationen werden Montage- und/oder Prüfarbeiten an den Fahrzeugen bzw. teilmontierten Fahrzeuge durchgeführt. Das System MOVITRANS ist beispielsweise beschrieben im Produktkatalog der Dürr Automotion GmbH für die Jahre 2003/2004 auf den Seiten 22 und 23.

Die Patentschrift US 5 293 308 A offenbart eine solche Vorrichtung, die den Oberbegriff des Anspruchs 1 bildet.

Der vorliegenden Erfindung liegt das Problem zu Grunde, eine Möglichkeit zur flexiblen Prüfung und Konfigurierung eines Fahrzeugs im Produktionsprozess vorzuschlagen.

Diese Aufgabe wird nach der vorliegenden Erfindung gelöst, indem die Transportvorrichtung einen Anschluss aufweist zur elektrischen Energieversorgung des Bordnetzes des mit der Transportvorrichtung zu fördernden Kraftfahrzeugs oder teilmontierten Kraftfahrzeugs, an den das Bordnetz des Kraftfahrzeugs oder teilmontierten Kraftfahrzeugs ankoppelbar ist, wobei der Anschluss über die berührungslose Energieversorgung der Transportvorrichtung mit elektrischer Energie versorgt wird.

Dadurch wird vorteilhaft erreicht, dass im Fahrzeug bereits während der Produktion die Bordnetzspannung zur Verfügung steht, so dass insbesondere die Funktion elektrischer und elektronischer Komponenten des Fahrzeugs (z. B. Steuergeräte im Fahrzeug) bereits während der Produktion geprüft werden kann.

Vorteilhaft erfolgt die Energieversorgung über ein ohnehin vorhandenes System, mit dem eine "umlaufende" Energieversorgung in der Produktionshalle und insbesondere auch der dort bewegbar angeordneten Transportvorrichtungen organisiert ist, so dass keine zusätzlichen Kontakte, Schienen und Schleifkontakte für die externe Energieversorgung des Fahrzeugs bzw. teilmontierten Fahrzeugs notwendig sind.

Die Bordnetzspannung steht auch dann zur Verfügung, wenn das Fahrzeug die Arbeitsstation durchlaufen hat, an der die Fahrzeugbatterie montiert und kontaktiert wird. Durch die vorliegende Erfindung wird aber vorteilhaft erreicht, dass durch die Prüfarbeiten an den elektrischen Komponenten die Batterie nicht belastet wird, so dass es nicht bereits während des Produktionsprozesses bereits zu einer erheblichen Entladung der Batterie kommt.

Dies erweist sich insbesondere im Hinblick auf den zunehmenden Anteil elektrischer Komponenten in den Fahrzeugen und den damit verbundenen Anstieg an notwendigen Prüfarbeiten als vorteilhaft. Indem das Fahrzeug bereits dann extern mit der Bordnetzspannung versorgbar ist, wenn es sich an der Transportvorrichtung befindet, können Prüfarbeiten an elektrischen Komponenten vorteilhaft bereits während der laufenden Produktion vorgenommen werden.

Insbesondere wird es möglich, Prüfarbeiten zeitnah dann durchzuführen, wenn alle notwendigen Komponenten für bestimmte Funktionsumfänge an den betreffenden Arbeitsstationen montiert und kontaktiert wurden. Wenn dabei Fehler erkannt werden, kann vorteilhaft die Fehlerbehebung zumindest dann noch an der betreffenden Arbeitsstation erfolgen, wenn es sich um eine Fehlerbehebung mit begrenztem Aufwand handelt. Es kann dann vermieden werden, dass das Fahrzeug zur Fehlerbehebung aus dem Produktionsprozess ausgeschleust werden muss.

Bei der Ausgestaltung nach Anspruch 2 ist der Anschluss von einer Steuereinheit aktivierbar sowie deaktivierbar.

Vorteilhaft wird es dadurch möglich, die Bordnetzspannung weg zu nehmen, wenn dies auf Grund von Montagearbeiten an der jeweiligen Arbeitsstation notwendig ist zur Sicherheit der entsprechenden Werker oder zur Vermeidung von Schäden an elektrischen Komponenten. Wenn die entsprechenden Montagearbeiten beendet sind, kann die externe elektrische Energieversorgung wieder aktiviert werden.

Bei der Ausgestaltung nach Anspruch 3 ist die Steuereinheit ein zentraler Leitrechner.

Die Informationsübertragung zur der Transportvorrichtung kann mittels eines lokalen Netzwerkes realisiert sein. Dies kann beispielsweise mittels des im Zusammenhang mit dem Stand der Technik erläuterten MOVITRANS erfolgen. Beim Anfahren bestimmter Arbeitsstationen kann also vom Leitrechner vorgegeben werden, dass der Anschluss an der Transportvorrichtung für die Energieversorgung des Fahrzeugs deaktiviert wird.

Bei der Ausgestaltung nach Anspruch 4 ist die Steuereinheit ein mobiles Steuergerät, das demontierbar an der Transportvorrichtung oder dem an der Transportvorrichtung befindlichen Kraftfahrzeug oder teilmontierten Kraftfahrzeug befestigbar ist, wobei das mobile Steuergerät über die Transportvorrichtung mit elektrischer Energie versorgbar ist.

Vorteilhaft ist auch das mobile Steuergerät unabhängig von dem Anschluss an der Transportvorrichtung über das Bordnetz des Fahrzeugs mit elektrischer Energie versorgbar. Dadurch kann das mobile Steuergerät weiterhin mit elektrischer Energie versorgt werden, auch wenn die externe elektrische Energieversorgung zum Fahrzeug deaktiviert ist. Die Funktionen des mobilen Steuergerätes bleiben also auch dann erhalten, wenn das Fahrzeug nicht extern mit elektrischer Energie versorgt wird.

Die Aktivierung und Deaktivierung der externen elektrischen Energieversorgung des Fahrzeugs durch das mobile Steuergerät kann alternativ oder zusätzlich zur Möglichkeit der Aktivierung und Deaktivierung der externen elektrischen Energieversorgung des Fahrzeugs durch den zentralen Leitrechner vorgesehen werden.

Sofern die Aktivierbarkeit und Deaktivierbarkeit nicht über den zentralen Leitrechner sondern nur über das mobile Steuergerät vorgesehen ist, ist die entsprechende Funktion dezentralisiert.

Soweit die zusätzliche Möglichkeit der Aktivierung und Deaktivierung der externen elektrischen Energieversorgung vorgesehen ist, besteht beispielsweise die Möglichkeit, dass vom Leitrechner zunächst beim Anfahren einer Arbeitsstation die externe elektrische Energieversorgung deaktiviert wird, um entsprechende Montagearbeiten durchführen zu können. Nach Beendigung der entsprechenden Montagearbeiten, die beispielsweise durch einen entsprechenden Dialog des Werkers mit dem mobilen Steuergerät festgestellt werden kann, besteht dann die Möglichkeit, dass von dem mobilen Steuergerät die externe elektrische Energieversorgung wieder aktiviert wird, um beispielsweise entsprechende Prüfarbeiten durchführen zu können, die die Funktionsfähigkeit der gerade montierten Komponenten betreffen.

Bei der Ausgestaltung nach Anspruch 5 ist das mobile Steuergerät mit einem fahrzeugseitigen Diagnosestecker kontaktierbar.

Dadurch besteht beispielsweise die Möglichkeit, dass das mobile Steuergerät vor dem Produktionsprozess lernt, welcher Funktionsumfang in dem zu produzierenden Fahrzeug realisiert werden soll. Entsprechend diesem Funktionsumfang kann dann Software für die entsprechenden Steuergeräte im Fahrzeug über den Diagnosestecker von dem mobilen Steuergerät geladen werden. Ebenso können über die Kontaktierung mit dem fahrzeugseitigen Diagnosestecker entsprechende Prüfarbeiten während des Produktionsprozesses vorgenommen werden.

Bei der Ausgestaltung nach Anspruch 6 ist ein mobiles Steuergerät demontierbar an der Transportvorrichtung oder dem an der Transportvorrichtung befindlichen Kraftfahrzeug oder teilmontierten Kraftfahrzeug befestigbar, wobei das mobile Steuergerät über die Transportvorrichtung oder über das Bordnetz des Fahrzeugs mit elektrischer Energie versorgbar ist und wobei das mobile Steuergerät mit einem fahrzeugseitigen Diagnosestecker kontaktierbar ist.

Im Unterschied zur Ausgestaltung nach den Ansprüchen 4 und 5 ist hier der Anschluss der Transportvorrichtung zur externen elektrischen Energieversorgung des Fahrzeugs nicht von dem mobilen Steuergerät aktivierbar bzw. deaktivierbar. Im übrigen ist die Funktionsweise identisch zu den vorherigen Erläuterungen.

Bei der Ausgestaltung nach Anspruch 7 ist die Transportvorrichtung Bestandteil eines Netzes zum drahtgebundenen Informationsaustausch mit einem Leitrechner. Das mobile Steuergerät ist im montierten Zustand ebenfalls Bestandteil des Netzes zum drahtgebundenen Informationsaustausch.

Dadurch ist die Möglichkeit des Informationsaustausches zwischen dem mobilen Steuergerät und dem Leitrechner gegeben. Beispielsweise können Ergebnisse durchgeführter Prüfarbeiten von dem mobilen Steuergerät an den Leitrechner übermittelt werden. Von dem Leitrechner können aktuelle Softwareversionen an die mobilen Steuergeräte übermittelt werden. Dies kann auch vorteilhaft außerhalb des Einsatzes der mobilen Steuergeräte im laufenden Produktionsprozess erfolgen. Das drahtgebundene Netz kann beispielsweise das eingangs beschriebene "MOVITRANS" - System sein.

Bei der Ausgestaltung nach Anspruch 8 ist das mobile Steuergerät mit einer Sende- und Empfangseinheit zum drahtlosen Informationsaustausch mit einem Leitrechner oder mit anderen festen oder mobilen Steuerrechnern ausgestattet. Diese anderen Steuerrechner können beispielsweise Prüfstationen an der Produktionslinie oder Handterminals von Werkern sein.

Soweit der volle Leistungsumfang des mobilen Steuergerätes vorgesehen wird, handelt es sich also um einen mobilen Prüf- und Konfigurierungsrechner. Die Konfigurierung erfolgt dabei, indem entsprechend dem Ausstattungsumfang des Fahrzeugs entsprechende Software mittels des mobilen Steuergerätes zu dem Fahrzeug übertragen wird und indem entsprechende Funktionen in dem Fahrzeug freigeschaltet werden. Dies betrifft eine Fahrzeugvariante, bei der bestimmte Ausstattungsumfänge von der Hardware und den benötigten Bauteilen eingebaut sind und die Funktion dieser Bauteile durch ein entsprechendes Steuergerät softwareseitig freigeschaltet wird.

Durch die demontierbare Befestigung des mobilen Steuergeräts an der Transportvorrichtung bzw. dem Fahrzeug bzw. dem teilmontierten Fahrzeug kann das mobile Steuergerät vorteilhaft beim Fahrzeug verbleiben, wenn das Fahrzeug aus dem laufenden Produktionsprozess ausgeschleust werden muss, weil ein Fehler erkannt wurde. Das mobile Steuergerät kann dann vorteilhaft in dem Fahrzeug deponiert werden, so dass beispielsweise nach einer Fehlerbehebung ein problemloses Wiedereinschleusen des Fahrzeugs in den Produktionsprozess möglich ist, weil in dem mobilen Steuergerät abgelegt ist, welchen Ausstattungsumfang das Fahrzeug haben soll. Dadurch ist keine weitergehende Sonderbehandlung vor dem Wiedereinschleusen erforderlich, wenn nach dem Ausschleusen der Fehler behoben wurde. Das Fahrzeug kann problemlos wieder in den Produktionsprozess integriert werden.

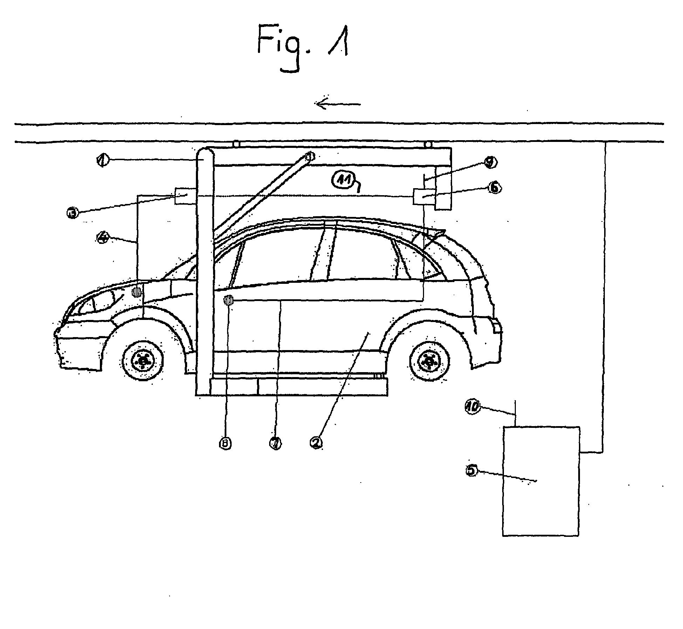

Die Figur zeigt eine Transportvorrichtung 1. An dieser Transportvorrichtung 1 ist ein Fahrzeug 2 angebracht. Mit der Transportvorrichtung 1 ist das Fahrzeug 2 in Richtung des Pfeils förderbar, um während des Produktionsprozesses verschiedene Arbeitsstationen anfahren zu können.

An den einzelnen Arbeitsstationen können Montagearbeiten vorgenommen werden sowie auch Prüfarbeiten. Über die Aufhängung der Transportvorrichtung 1 ist ein Anschluss 3 an der Transportvorrichtung 1 mit elektrischer Spannung versorgbar. An diesen Anschluss 3 ist das Bordnetz des Fahrzeugs 2 mit dem hier dargestellten Kabel 4 anschließbar.

Der Anschluss 3 der Transportvorrichtung 1 kann vorteilhaft angesteuert werden, um darüber die externe elektrische Energieversorgung des Fahrzeugs 2 zu- bzw. abschalten zu können.

Der Anschluss 3 kann zum einen über einen Leitrechner 5 ansteuerbar sein. Dazu ist die Transportvorrichtung 1 über die Aufhängung nicht nur mit elektrischer Energie versorgbar. Es ist dann weiterhin eine drahtgebundene Verbindung zum Informationsaustausch vorgesehen. Über diese drahtgebundene Verbindung zwischen dem Leitrechner 5 und der Transportvorrichtung 1 (und damit auch dem Anschluss 3) kann die externe elektrische Energieversorgung des Fahrzeugs 2 zu- bzw. abschaltbar sein.

Weiterhin kann der Anschluss 3 alternativ oder zusätzlich über ein mobiles Steuergerät 6 ansteuerbar sein. Diese Option ist mit der strichlinierten Linie 11 dargestellt. Das mobile Steuergerät 6 kann ebenfalls über die Aufhängung der Transportvorrichtung 1 und alternativ über das Bordnetz des Fahrzeugs 7 mit elektrischer Energie versorgbar sein. Ebenso kann dieses mobile Steuergerät über den drahtgebundenen Informationsaustausch mit dem Leitrechner 5 verbunden sein. Über diesen Informationsaustausch kann das mobile Steuergerät 6 beispielsweise mit aktuellen Softwareversionen für die Steuergeräte des Fahrzeugs 2 versorgt werden.

Das mobile Steuergerät 6 ist demontierbar an der Transportvorrichtung 1 angebracht. Bei einer erkannten Funktionsstörung in einem Prüfschritt, auf Grund deren das Fahrzeug ausgeschleust wird, kann dann vorteilhaft das mobile Steuergerät 6 beim Fahrzeug 2 verbleiben. Da Informationen über den erkannten Fehler gespeichert sind, kann vorteilhaft die Fehlerbehebung vereinfacht werden. Weiterhin ist im mobilen Steuergerät 6 die Information verfügbar, welche Komponenten in dem Fahrzeug bereits eingebaut sind und in welchem Umfang bereits benötigte Software geladen wurde. Damit ist das Fahrzeug wiederum einfach wieder in den Produktionsprozess eingliederbar.

Von dem mobilen Steuergerät 6 ausgehend ist eine Verbindungsleitung 7 zu einem Diagnosestecker 8 des Fahrzeugs 2 zu sehen. Über diesen Diagnosestecker 8 können von dem mobilen Steuergerät 6 entsprechende Prüfschritte initiiert und überwacht werden. Weiterhin kann über diesen Diagnosestecker Software von dem mobilen Steuergerät 6 zu den entsprechenden Steuergeräten des Fahrzeugs geladen werden. Insbesondere wenn das mobile Steuergerät nicht auf den Anschluss 3 einwirkt, kann die Verbindungsleitung 7 so gestaltet sein, dass darüber auch das Bordnetz des Fahrzeugs 2 extern initiiert von dem mobilen Steuergerät 6 mit elektrischer Energie versorgbar ist.

Weiterhin ist zu sehen, dass sowohl das mobile Steuergerät 6 wie auch der Leitrechner 5 mit einer Sende- und Empfangseinheit 9 bzw. 10 ausgestattet sein können. Darüber ist dann eine drahtlose Kommunikation zwischen dem mobilen Steuergerät 6 und dem Leitrechner 5 oder mit anderen Steuerrechnern wie beispielsweise Prüfstationen an der Produktionslinie oder Handterminals von Werkern möglich.

## Patentansprüche

1. Transportvorrichtung (1) für ein Kraftfahrzeug (2) oder teilmontiertes Kraftfahrzeug (2) im laufenden Produktionsprozess, wobei die Transportvorrichtung (1) zur Aufnahme eines Kraftfahrzeugs (2) oder teilmontierten Kraftfahrzeugs (2) ausgebildet ist, wobei das Kraftfahrzeug (2) oder das teilmontierte Kraftfahrzeug (2) mittels der Transportvorrichtung (1) zu verschiedenen Arbeitsstationen förderbar ist, wobei die Transportvorrichtung (1) während des Produktionsprozesses fortlaufend und berührungslos mit elektrischer Energie versorgbar ist,
**dadurch gekennzeichnet, dass** die Transportvorrichtung (1) einen Anschluss (3) aufweist zur elektrischen Energieversorgung des Bordnetzes des mit der Transportvorrichtung (1) zu fördernden Kraftfahrzeugs (2) oder teilmontierten Kraftfahrzeugs (2), an den das Bordnetz des Kraftfahrzeugs (2) oder teilmontierten Kraftfahrzeugs (2) ankoppelbar ist (4), wobei der Anschluss (3) über die berührungslose Energieversorgung der Transportvorrichtung (1) mit elektrischer Energie versorgt wird.

2. Transportvorrichtung nach Anspruch 1,
**dadurch gekennzeichnet, dass** der Anschluss (3) von einer Steuereinheit (5, 6) aktivierbar sowie deaktivierbar ist.

3. Transportvorrichtung nach Anspruch 2,
**dadurch gekennzeichnet, dass** die Steuereinheit (5, 6) ein zentraler Leitrechner (5) ist.

4. Transportvorrichtung nach Anspruch 2 oder 3,
**dadurch gekennzeichnet, dass** die Steuereinheit (5, 6) ein mobiles Steuergerät (6, 11) ist, das demontierbar an der Transportvorrichtung (1) oder dem an der Transportvorrichtung (1) befindlichen Kraftfahrzeug (2) oder teilmontierten Kraftfahrzeug (2) befestigbar ist, wobei das mobile Steuergerät (6) über die Transportvorrichtung (1) oder über das Bordnetz des Fahrzeugs mit elektrischer Energie versorgbar ist.

5. Transportvorrichtung nach Anspruch 4,
**dadurch gekennzeichnet, dass** das mobile Steuergerät (6) mit einem fahrzeugseitigen Diagnosestecker (8) kontaktierbar ist (7).

6. Transportvorrichtung nach einem der Ansprüche 1 bis 3,
**dadurch gekennzeichnet, dass** ein mobiles Steuergerät (6) demontierbar an der Transportvorrichtung (1) oder dem an der Transportvorrichtung (1) befindlichen Kraftfahrzeug (2) oder teilmontierten Kraftfahrzeug (2) befestigbar ist, wobei das mobile Steuergerät (6) über die Transportvorrichtung (1) oder über das Bordnetz des Fahrzeugs mit elektrischer Energie versorgbar ist und wobei das mobile Steuergerät (6) mit einem fahrzeugseitigen Diagnosestecker (8) kontaktierbar ist (7).

7. Transportvorrichtung nach einem der Ansprüche 4 bis 6,
**dadurch gekennzeichnet, dass** die Transportvorrichtung (1) Bestandteil eines Netzes zum drahtgebundenen Informationsaustausch mit einem Leitrechner (5) ist und dass das mobile Steuergerät (6) im montierten Zustand ebenfalls Bestandteil des Netzes zum drahtgebundenen Informationsaustausch ist.

8. Transportvorrichtung nach einem der Ansprüche 4 bis 7,
**dadurch gekennzeichnet, dass** das mobile Steuergerät (6) mit einer Sende- und Empfangseinheit (9) zum drahtlosen Informationsaustausch mit einem Leitrechner (5, 10) oder mit anderen festen oder mobilen Steuerrechnern ausgestattet ist.

## Claims

1. Transport device (1) for a motor vehicle (2) or partially assembled motor vehicle (2) during the production process, the transport device (1) being configured to receive a motor vehicle (2) or partially assembled motor vehicle (2), said motor vehicle (2) or partially assembled motor vehicle (2) being conveyable by means of the transport device (1) to the various work stations, and the transport device (1) having a continuous and contact-free power supply during the production process,
**characterised in that** the transport device (1) is provided with a terminal (3) for supplying power to the on-board electrical system of the motor vehicle (2) or partially assembled motor vehicle (2) to be conveyed by the transport device (1), the on-board electrical system of the motor vehicle (2) or partially assembled motor vehicle (2) being connectable (4) to said terminal (3) and said terminal (3) being supplied with electrical energy via the contact-free power supply to the transport device (1).

2. The transport device of claim 1,
**characterised in that** the terminal (3) can be activated and deactivated by a control unit (5 , 6).

3. The transport device of claim 2,
**characterised in that** the control unit (5, 6) is a centralised host computer (5).

4. The transport device of claim 2 or 3,
**characterised in that** the control unit (5, 6) is a mobile control unit (6, 11) that can be attached removably to the transport device (1) or to the motor vehicle (2) or partially assembled motor vehicle (2) being conveyed by the transport device (1); power can be supplied to said mobile control unit (6) via the transport device (1) or via the vehicle's on-board electrical system.

5. The transport device of claim 4,
**characterised in that** the mobile control unit (6) can be connected up (7) to a diagnostic connector (8) in the vehicle.

6. Transport device according to one of the claims 1 to 3,
**characterised in that** a mobile control unit (6) can be attached removably to the transport device (1) or to the motor vehicle (2) or partially assembled motor vehicle (2) being conveyed by the transport device (1); power can be supplied to said mobile control unit (6) via the transport device (1) or via the vehicle's on-board electrical system, and the mobile control unit (6) can be connected up (7) to a diagnostic connector (8) in the vehicle.

7. Transport device according to one of the claims 4 to 6,
**characterised in that** the transport device (1) is integrated in a network for wired data exchange with a host computer (5), and that when mounted, the mobile control unit (6) is likewise integrated in the wired data-exchange network.

8. Transport device according to one of the claims 4 to 7,
**characterised in that in that** the mobile control unit (6) is equipped with a transmitter/receiver unit (9) for wireless data exchange with a host computer (5, 10) or with other stationary or mobile control computers.

## Revendications

1. Dispositif de transport (1) pour un véhicule (2) ou un véhicule partiellement monté (2) dans un processus de production en continu, dans lequel le dispositif de transport (2) est conçu pour recevoir un véhicule (2) ou un véhicule partiellement monté (2), le véhicule (2) ou le véhicule partiellement monté (2) pouvant être transporté par le dispositif de transport (1) à différentes station de montage, le dispositif de transport (1) durant le processus de fabrication étant en permanence alimenté en énergie électrique sans contact, **caractérisé en ce que** le dispositif de transport (1) est muni d'un raccord (3) pour l'alimentation en énergie électrique du réseau de bord du véhicule (2) ou du véhicule partiellement monté (2) à transporter avec le dispositif de transport (1), sur lequel peut être raccordé le réseau de bord du véhicule (2) ou du véhicule partiellement monté (2), le raccord (3) étant alimenté en énergie électrique via l'alimentation en énergie sans contact du dispositif de transport.

2. Dispositif de transport selon la revendication 1, **caractérisé en ce que** le raccord (3) peut être activé ainsi que désactivé par une unité de commande (5, 6).

3. Dispositif de transport selon la revendication 2, **caractérisé en ce que** l'unité de commande (5, 6) est un ordinateur central (5).

4. Dispositif de transport selon la revendication 2 ou 3, **caractérisé en ce que** l'unité de commande (5, 6) est un appareil de commande mobile (6, 11) qui peut être fixé de façon démontable au dispositif de transport (1) ou au véhicule (2), ou au véhicule partiellement monté, se trouvant dans le dispositif de transport (1), l'appareil de commande mobile (6) pouvant être alimenté en énergie électrique par le dispositif de transport (1) ou via le réseau de bord du véhicule.

5. Dispositif de transport selon la revendication 4, **caractérisé en ce que** l'appareil de commande (6) peut être mis en contact (7) avec une prise de diagnostic (8) située du côté du véhicule.

6. Dispositif de transport selon l'une des revendications 1 à 3, **caractérisé en ce qu'**un appareil de commande mobile (6) peut être fixé de façon démontable au dispositif de transport (1) ou au véhicule (2), ou au véhicule partiellement monté (2), se trouvant dans le dispositif de transport (1), l'appareil de commande mobile (6) pouvant être alimenté en énergie électrique par le dispositif de transport (1) ou via le réseau de bord du véhicule et l'appareil de commande mobile (6) pouvant être mis en contact (7) avec une prise de diagnostic (8) située du côté du véhicule.

7. Dispositif de transport selon l'une des revendications 4 à 6, **caractérisé en ce que** le dispositif de transport (1) fait partie d'un réseau d'échange d'information par fil avec un ordinateur central (5) et **en ce que** l'appareil de commande mobile (6) à l'état monté fait également partie du réseau d'échange d'information filaire.

8. Dispositif de transport selon l'une des revendications 4 à 7, **caractérisé en ce que** l'appareil de commande mobile (6) est muni d'une unité d'émission et de réception (9) pour l'échange d'information sans fil avec un ordinateur central (5, 10) ou avec d'autres ordinateurs de commande fixes ou mobiles.
